# EUROPÄISCHE PATENTSCHRIFT

(11) **EP 1 164 077 B1**
(45) Veröffentlichungstag und Bekanntmachung des Hinweises auf die Patenterteilung: **09.11.2005**
(21) Anmeldenummer: 01114285.8
(22) Anmeldetag: 13.06.2001
(51) Int. Cl.: B64D 11/00

(54) **Passagierkabine eines Verkehrsflugzeuges**
Passenger cabin of a transport aircraft
Cabine passager d'un avion de transport

(30) Priorität: 15.06.2000 DE 10029369
(43) Veröffentlichungstag der Anmeldung: 19.12.2001
(60) Teilanmeldung: 05006230.6
(73) Patentinhaber: Airbus Deutschland GmbH, 21129 Hamburg (DE)
(72) Erfinder: Nieberle, Jan, 50968 Köln (DE)
(74) Vertreter: Hansmann, Dierk

(56) Entgegenhaltungen:
- EP-A- 0 514 650
- EP-A- 0 614 806
- DE-A- 19 620 166
- GB-A- 2 326 863
- US-A- 4 947 762
- US-A- 5 441 326
- US-A- 5 784 836
- US-A- 5 954 109

## Beschreibung

Die Erfindung betrifft ein Passagierkabinenausstattungssystem zur Anwendung in Flugzeugpassagierkabinen unterschiedlicher Rumpfquerschnitte sowie ein Verfahren zur Durchführung einer Passagierkabinenausstattung.

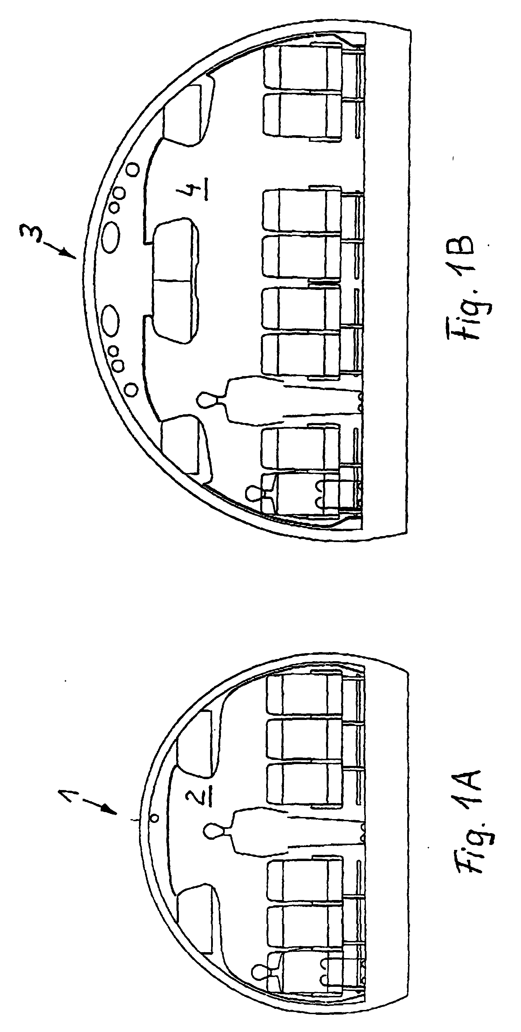

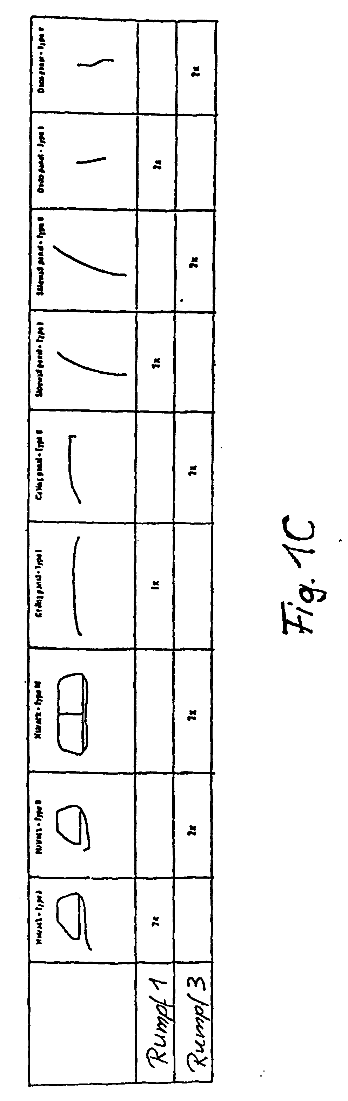

An Flugzeugpassagierkabinen werden im Zuge der Verbesserung des Komforts immer größere Anforderungen gestellt. Gleichzeitig besteht das Erfordernis der Flugzeugbetreiber, einen hohen Kommunalitätsgrad zwischen den einzelnen Flugzeugtypen eines Flugzeugherstellers zu erreichen, um eine reduzierte Ersatzteilhaltung und vereinheitlichte Wartungsabläufe sicherzustellen. Auch ein wesentliches Kriterium für die Produktphilosophie eines Flugzeugherstellers ist es, ein einheitliches Erscheinungsbild - die sogenannte "Corporate Identity" anzustreben. Beispielsweise ist bei Airbus-Flugzeugen in der Single-Aisle-Familie (u.a. A320) eine nach oben hin aufweitende Kabinenkontur vorgesehen, wobei eine große Deckenfläche erreicht ist, die gleichzeitig für die Allgemeinbeleuchtung eine indirekte Beleuchtung erzielt. In der Flugzeugpassagierkabine in Twin-Aisle-Flugzeugen (u.a. A330/A340) wurde versucht, dieses Merkmal ebenfalls umzusetzen. In der Figur 1 sind im Querschnitt die Flugzeugtypen mit unterschiedlichen Rumpfdurchmessern ersichtlich sowie eine Übersicht über die verwendeten Verkleidungsteile der beiden Flugzeugtypen. Es ist ersichtlich, dass zur Realisierung des angestrebten einheitlichen Erscheinungsbildes jeweils für die Flugzeugkabinen mit unterschiedlichen Rumpfdurchmessem unterschiedliche Verkleidungsteile und Ausstattungsteile eingesetzt werden.
Für Flugzeugkabinen mit kleinem Rumpfdurchmesser werden Verkleidungs- und Ausstattungsteile (Hatracks, Ceiling-Panels, Sidewall-Panels, Dado-Panels) vom Typ I eingesetzt und für Flugzeugkabinen mit großem Rumpfdurchmesser werden Bauteile Typ II eingesetzt. Die Bauteile des Typs I und II ähneln sich, sind jedoch nicht identisch. Daraus resultiert, dass bei Kabinenentwicklungen nach dem derzeitigen Stand der Technik im Einzelfall die Bauteilentwicklung separat vorgenommen wird und damit eine großer Kosten- und Zeitaufwand für Kabinenentwicklungen betrieben wird. Insbesondere bei einer Vergrößerung der Produktpalette, wie es derzeit vorgesehen ist mit dem Bau eines Verkehrsflugzeuges wie die A380 mit einem nochmals größeren Rumpfquerschnitt und zwei durchgängigen Passagierdecks, ist eine völlige Neuentwicklung der Kabine notwendig.
Aus EP-A-0 437 870 ist ein universell einsetzbares Seitenverkleidungsteil für Flugzeugpassagierkabinen beschrieben, welches typenübergreifend in unterschiedlichen Größen von Flugzeugen verwendbar ist. Es ist flexibel ausgebildet, um ein Anpassen an unterschiedliche Flugzeuggrößen durch ein "Aufbiegen" des Verkleidungsteiles zu erreichen. Eine Befestigung des Verkleidungsteiles erfolgt im oberen und unteren Bereich durch H-förmige Schienen, die an der Flugzeugstruktur befestigt sind und entsprechend der Größe der Flugzeugkabine das Verkleidungsteil halten (unter mehr oder weniger Spannung). Uninstalliert ist die größte Krümmung des Verkleidungsteiles vorgesehen. Für einen größeren Flugzeugdurchmesser (z.B. Flugzeugtyp Boeing 747) ist ein stärkeres Aufbiegen notwendig, für einen kleineren Flugzeugdurchmesser (z.B. Flugzeugtyp Boeing 737) ist nur ein geringes Aufbiegen notwendig. Die Flexibilität des Materials ist für Größenanpassungen wesentlich. Das Aufbiegen ist somit Bestandteil des Montageprinzips von Seitenverkleidungen in Passagierkabinen unterschiedlicher Größe und kann nicht unter Verwendung der üblichen Werkstoffe und Materialien für Flugzeugausstattungsteile realisiert werden.

Der Erfindung liegt daher die Aufgabe zugrunde, ein Passagierkabinenausstattungssystem der eingangs genannten Art derart auszubilden, dass Flugzeugverkleidungs- und Ausstattungsteile übergreifend für mehrere Flugzeugtypen einsetzbar sind und damit der Zeitaufwand für eine Kabinenentwicklung reduziert sowie eine Vereinheitlichung in den Wartungsabläufen sowie eine reduzierte Ersatzteilhaltung ermöglicht wird.

Diese Aufgabe wird bei einem gattungsgemäßen Passagierkabinenausstattungssystem mit den im Patentanspruch 1 genannten Maßnahmen gelöst. Ein Verfahren zur Durchführung einer Passagierkabinenausstattung ist in dem Anspruch 3 angegeben.

Vorteilhaft ergibt sich eine Reduzierung des notwendigen Aufwandes zur Neuentwicklung einer Passagierkabine, wenn ein neuer Flugzeugtyp entwickelt wird. Durch die Verwendung von typenübergreifenden Seitenverkleidungsteilen können die Ausstattungsteile in größeren Stückzahlen produziert werden. Damit reduzieren sich die Stückkosten pro Teil, da unter anderem durch Erhöhung der Fertigungsstückzahlen die anteiligen Werkzeugkosten sinken. Insbesondere für die Flugzeugbetreiber ergibt sich eine reduzierte Ersatzteilhaltung sowie vereinheitlichte Wartungsabläufe, die den notwendigen Wartungsaufwand ebenfalls senken.
Eine flexible Anpassung der Seitenverkleidungen an unterschiedliche Seitenhöhen der Passagierkabinen ist ermöglicht. Überschüssige Höhen werden durch die überlappende Anordnung mit Lichtabdeckteilen ausgeglichen.

Eine vorteilhafte Ausgestaltung ist in dem Unteranspruch 2 angegeben. Mit den Maßnahmen des Anspruchs 2 kann vorteilhaft Klimaluft in die Passagierkabine geführt werden.
Weitere vorteilhafte Ausgestaltungen sowie Weiterbildungen sind in der nachfolgenden Figurenbeschreibung dargestellt.

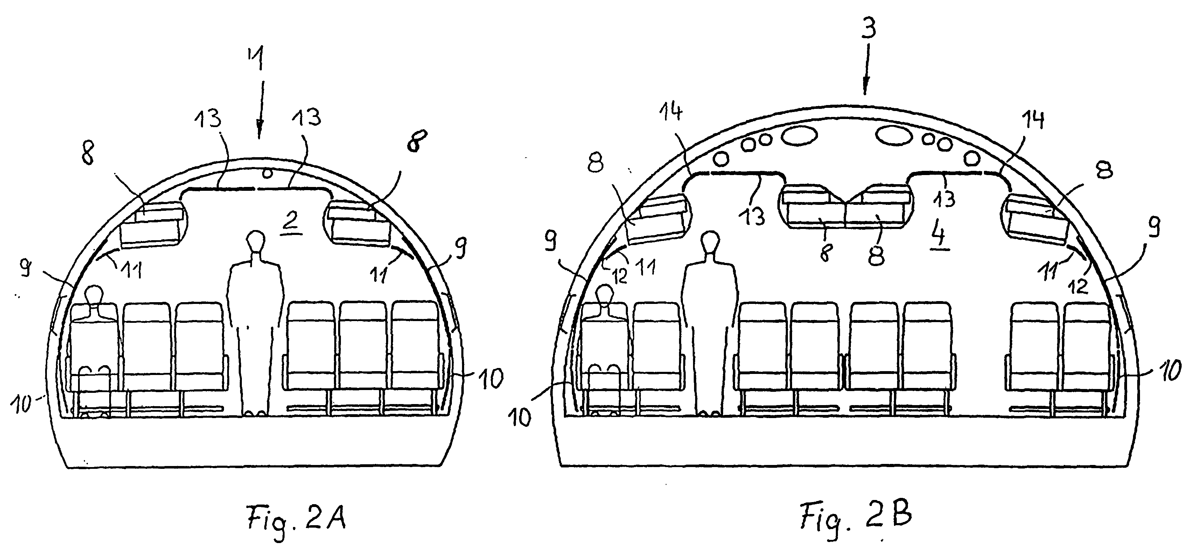

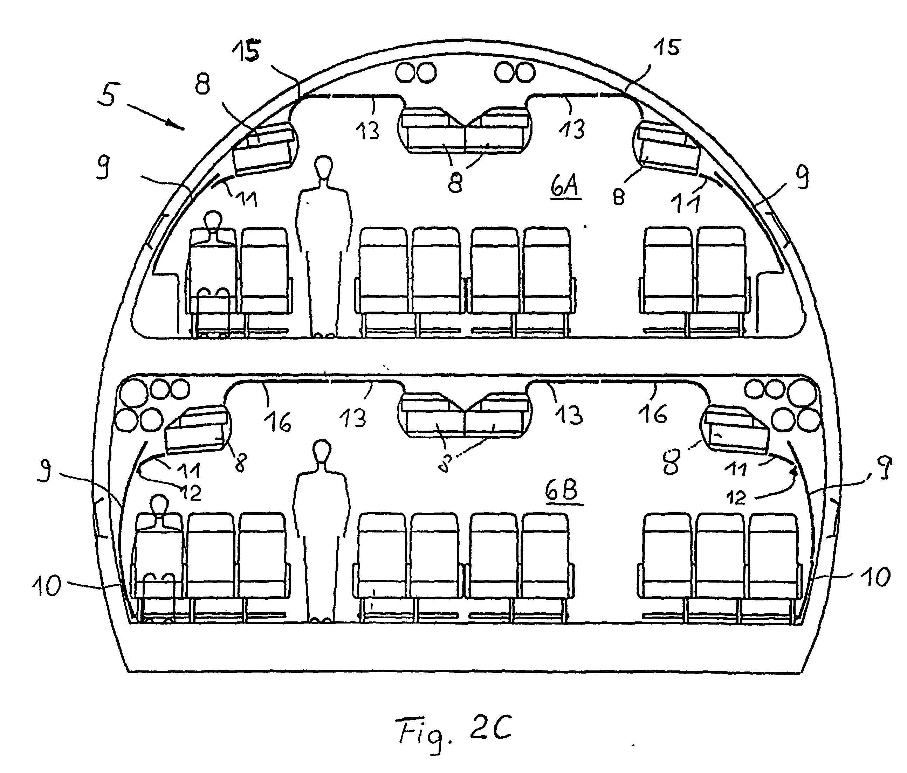

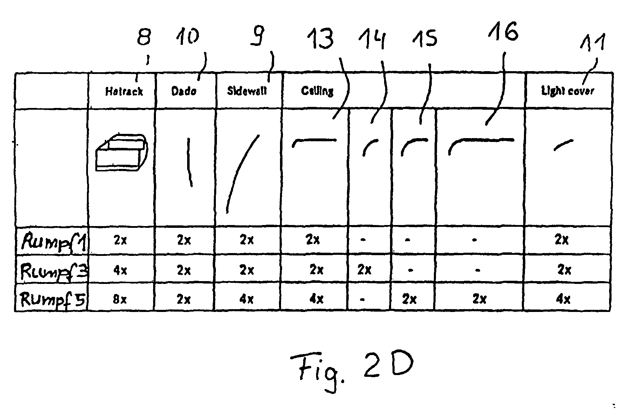

In der Zeichnung sind Ausführungsbeispiele der Flugzeugkabinen innenausstattung dargestellt, welche nachstehend anhand der Figuren 2 bis 9 näher beschrieben werden. In der Figur 1 ist der nächstliegende Stand der Technik dargestellt. In den Figuren sind gleiche Bauteile mit gleichen Bezugszeichen versehen.

Es zeigt
- Fign. 1A bis 1C: zwei Flugzeugkabinen mit unterschiedlichen Rumpfdurchmessern im Querschnitt sowie eine Übersicht der wesentlichen Ausstattungs- und Verkleidungsteile, die nach dem derzeitigen Stand der Technik Verwendung finden,
- Fign. 2A bis 2D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer ersten Ausführungsform,
- Fign. 3A bis 3D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer zweiten Ausführungsform,
- Fign. 4A bis 4D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer dritten Ausführungsform,
- Fign. 5A bis 5D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer vierten Ausführungsform,
- Fign. 6A bis 6D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer fünften Ausführungsform,
- Fig. 7: zeigt ein Ausstattungsteil in Form eines Sidewall Panels in einer Ansicht von vorn,
- Fig. 8: zeigt einen Fenstertrichter in einer Ansicht von Form als Einzelheit und
- Fig. 9: zeigt einen Querschnitt durch eine Flugzeugpassagierkabine mit der Anordnung einer oberen Seitenwandverkleidung.

In Fig. 1A ist ein Querschnitt 1 eines Flugzeugrumpfes mit einem kleinen Rumpfdurchmesser dargestellt. Beispielsweise weist ein derartiges Flugzeug einen Rumpfdurchmesser von ungefähr 3,96 m auf und gehört bei den Airbus-Flugzeugen zur Single-Aisle-Familie (u.a. A320). Eine Flugzeugpassagierkabine 2 mit derzeit üblichen Ausstattungs- und Verkleidungsteilen ist im Flugzeugrumpf 1 vorgesehen. Eine Flugzeugpassagierkabine 4 für beispielsweise Twin-Aisle-Flugzeuge (u.a. A330/A340) ist in einem Flugzeugrumpf 3 mit einem Rumpfdurchmesser von ca. 5,64 m vorgesehen, der in Fig. 1B gezeigt ist. Eine Übersicht über die verwendeten Verkleidungsteile der beiden Flugzeugtypen ist in Fig. 1C ersichtlich. Für Flugzeugkabinen 2 mit kleinerem Rumpfdurchmesser werden Verkleidungs- und Ausstattungsteile (Hatracks, Ceiling-Panels, Sidewall-Panels, Dado-Panels) vom Typ I eingesetzt und für Flugzeugkabinen mit größerem Rumpfdurchmesser werden Bauteile des Typs II (Hatracks, Ceiling-Panels, Sidewall-Panels, Dado-Panels) bzw. des Typs III (Mittelhatracks) eingesetzt. Eine Ähnlichkeit der Bauteile wird angestrebt, um ein einheitliches Erscheinungsbild der Produktfamilie eines Herstellers zu erreichen. Jedoch werden keine identischen Bauteile in beiden Kabinen verwendet. Fig. 1 beschreibt den Stand der Technik, von dem die Erfindung ausgeht.

In Fign. 2A bis 2D ist eine erste Ausführungsform der Innenausstattung dargestellt. Neben den in Fign. 2A und 2B gezeigten Rumpfquerschnitten 1 und 3 ist es auch für eine Flugzeugkabine 6 in einem in der Entwicklung befindlichen Flugzeug mit zwei durchgängigen Passagierdecks 6A und 6B und einem ovalen Rumpfquerschnitt 5 vorgesehen, Ausstattungsteile und Verkleidungsteile typenübergreifend einzusetzen. Die Flugzeugkabine 6 des größten Flugzeugrumpfes 5 ist in der Figur 2C dargestellt. Bei der Realisierung eines Bausteinkonzeptes mit identischen Teilen kann bei den drei beispielhaft gezeigten Rumpfquerschnitten eine Flugzeugkabinenentwicklung effektiv gestaltet werden und vorteilhaft die Teilevielfalt reduziert werden. Damit ergeben sich größere Stückzahlen der verwendeten Teile, was wiederum positive Auswirkungen auf die Herstell- und Fertigungskosten der Teile hat. So ist beispielsweise bei der Anwendung von einem einzigen Typ des Hatracks 8 für die Flugzeugkabinen aller Rumpfquerschnitte 1, 3 und 5 eine siebenfache Erhöhung der Teileanzahl zu erwarten. In einer tabellarischen Übersicht in Fig. 2D ist dargestellt, welche weiteren Bauteile in welcher Anzahl für die unterschiedlichen Kabinengrößen der Passagierkabinen 2, 4 und 6 zur Verfügung stehen. Bei den Seitenverkleidungsteilen (Sidewall-Panels) 9 und Fußraumverkleidungsteilen (Dado-Panels) 10 sind aufgrund der unterschiedlichen Rumpfdurchmesser auch unterschiedliche Krümmungsradien und Umfangsstrecken zu berücksichtigen. In einer bevorzugten Ausgestaltung bezieht sich der Krümmungsradius des Seitenverkleidungsteiles 9 auf den nahezu kreisförmigen, etwa 4000 mm großen Rumpfquerschnitt des Rumpfes 1. Die Anwendung des gleichen Seitenverkleidungsteiles 9 auf den Rumpfdurchmesser des Rumpfes 3 von bevorzugt 5640 mm ergibt einen minimalen Verlustraum, der jedoch im Fußraum für den Passagier kaum wahrnehmbar ist und durch ein Fußraumverkleidungsteil 10 überbrückt wird. Die Anwendung des Seitenverkleidungsteils 9 in der Passagierkabine 6 des Flugzeuges mit ovalem Querschnitt 5 ist ebenfalls möglich. In Fig. 2C ist ersichtlich, dass im oberen Passagierdeck 6A die Montage der Seitenverkleidung 9 nur geringe Verlusträume ergibt, da der Radius dieses Bereichs dem des Flugzeugrumpfes 3 etwa entspricht. Im unteren Passagierdeck 6B sind aufgrund des größten Krümmungsradius des Flugzeugrumpfes 5 in diesem Bereich die Abweichungen ebenfalls am größten und in einer bevorzugten Ausgestaltung werden die Verlusträume aufgrund der Krümmung möglichst im oberen Bereich plaziert, um im Ellbogen- und Schulterbereich die größte Breite der Kabine 6 zu erreichen. Da bei der Anwendung eines Standard-Seitenverkleidungsteils 9 die Höhe dieser Verkleidung vorgegeben ist und in den Kabinen 1, 3 und 5 die zu verkleidenden Kabinen unterschiedliche Seitenhöhen aufweisen, werden zum Ausgleich bzw. zum Verdecken der überschüssigen Höhe Seitenlichtabdeckungen (Lateral Light Cover) 11 angeordnet. Mit der Verwendung dieser Abdeckungen 11 können in einfacher Art die Übergangsbereiche flexibel gestaltet und unaufwendig abgedeckt werden. Entstehende Spaltbereiche 12 zwischen den Seitenverkleidungen 9 und der Seitenlichtabdeckung 11 können in einer bevorzugten Weiterbildung als Klimaluftauslässe genutzt werden.

Für den Deckenbereich der Passagierkabinen 2, 4 und 6 sind Deckenverkleidungselemente 13, 14, 15 und 16 vorgesehen, die entsprechend miteinander kombiniert werden können. Zwei Deckenverkleidungselemente 13 sind für den kleinen Rumpf 1 vorgesehen (Fig. 2A), wobei diese beiden Elemente spiegelbildlich ausgebildet sind und eine montagefreundliche, zweiteilige Decke bilden. Für den Rumpf 3 (Fig. 28) mit zwei Gängen können ebenfalls zwei Deckenverkleidungsteile 13 diesen Typs I verwendet werden. Im Deckenbereich der äußeren Gepäckablagen 8 ist jedoch jeweils eine spezifische Deckenverkleidung 14 vom Typ II vorgesehen. Für den Rumpf 5 (Fig. 2C) mit den zwei Passagierdecks 6A und 6B sind Deckenverkleidungen 13 vom Typ I viermal vorgesehen. Jeweils ausgehend von der mittleren Gepäckablage 8 werden die Deckenverkleidungen 13 im Oberdeck 6A durch zwei Deckenverkleidungen 15 vom Typ III ergänzt sowie im Hauptdeck 6B durch Deckenverkleidungen 16 vom Typ IV.

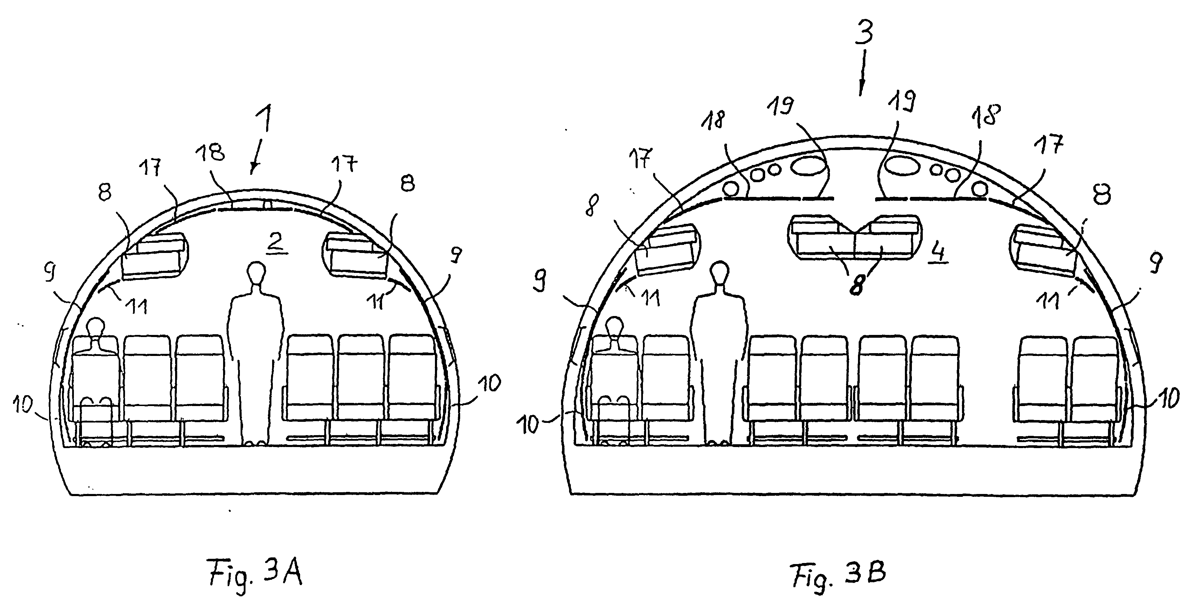

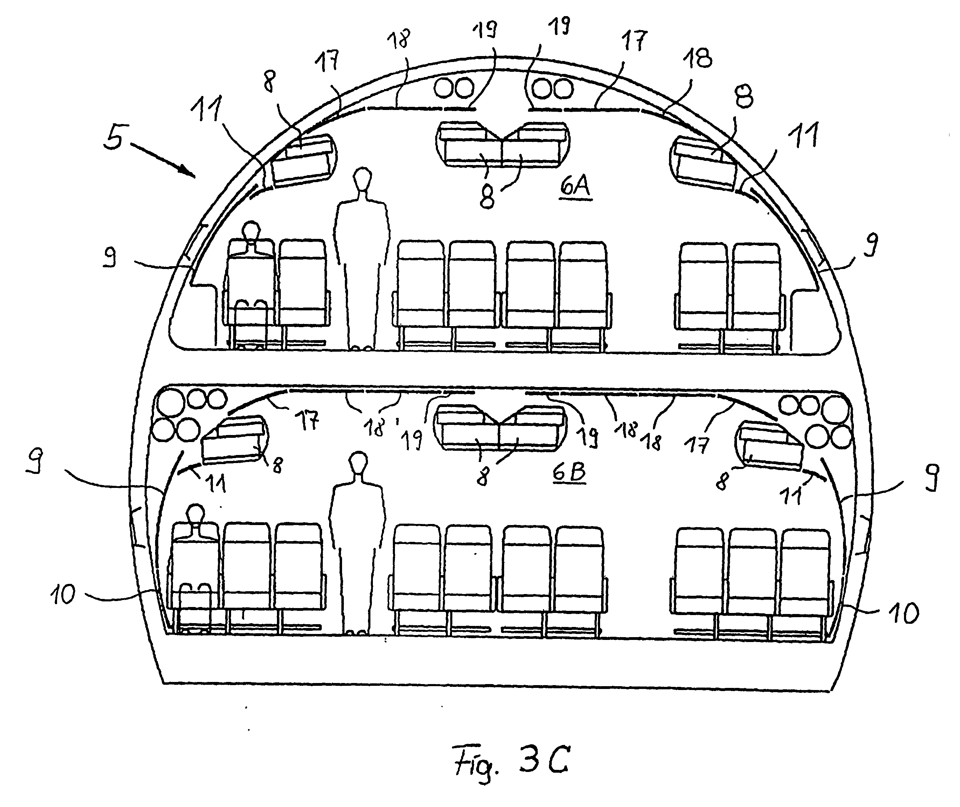

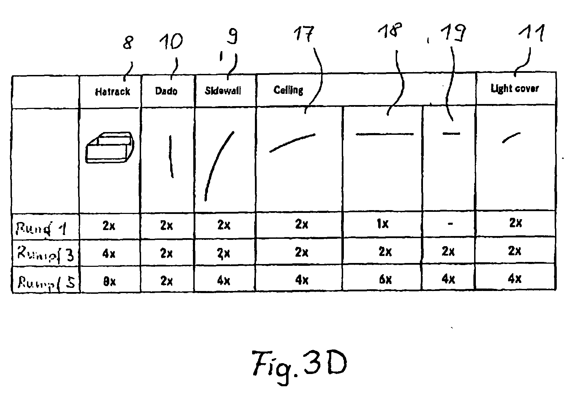

In den Fign. 3A bis 3D ist eine zweite Ausführungsform der Innenausstattung dargestellt. In dieser Ausführungsform werden Gepäckablagen (Hatracks) 8, Seitenlichtabdeckungen (Lateral Light Cover) 11, Seitenverkleidungen (Sidewall Panel) 9 und Fußraumverkleidungen (Dado Panel) 10 prinzipgleich zur vorangegangenen Ausführungsform genutzt. Die Anzahl der verschiedenen Typen der Deckenverkleidungen konnte von vier verschiedenen Typen der ersten Ausführungsform (Deckenverkleidungen 13 bis 16) auf drei verschiedene Typen von Deckenverkleidungen 17, 18 und 19 reduziert werden. Damit wird die Stückzahl der jeweils benötigten Deckenverkleidungen erhöht, was den Fertigungsaufwand (z. B. anteilige Werkzeugkosten) sinken lässt.
Die Decke der Passagierkabine 2 vom Flugzeug mit dem kleinsten Rumpfdurchmesser 1 ist in dieser zweiten Ausführungsform dreiteilig ausgeführt; sie besteht aus jeweils zwei Deckenverkleidungselementen 17 und einem Deckenverkleidungselement 18 (siehe Fig. 3A).
Die Decke der Passagierkabine 4 mit zwei Gängen zeigt eine sechsteilige Ausführung. Jeweils ein gekrümmtes Deckenverkleidungselement 17 deckt den äußeren Deckenbereich der Passagierkabine 4 ab. Die mittleren Deckenbereiche werden durch das nahezu planare oder nur geringfügig gekrümmte Deckenverkleidungselement 18 abgedeckt. Daran schließt sich in Richtung der mittleren Gepäckablagen 8 ein kleineres, ebenfalls nahezu planares Deckenverkleidungselement 19 an (siehe Fig. 3B).
Die Passagierkabine des Flugzeuges 5 (siehe Fig. 3C) weist im Oberdeck 6A eine der Passagierkabine 4 gleichende Anordnung von Deckenverkleidungselementen 17, 18, 19 auf. Beim Mitteldeck 6B wird das Deckenverkleidungselement 17 jeweils im äußeren Deckenbereich angeordnet.
Die mittleren Deckenbereiche werden durch zwei nahezu planare oder nur geringfügig gekrümmte Deckenverkleidungselemente 18 abgedeckt. Daran schließt sich in Richtung der mittleren Gepäckablagen 8 jeweils ein kleineres, ebenfalls nahezu planares Deckenverkleidungselement 19 an. Aufgrund der üblicherweise symmetrischen Anordnung von den Verkleidungselementen in Bezug auf die Flugzeuglängsachse ergibt sich somit ein Bedarf für das Flugzeug 5 mit ovalförmigem Querschnitt von insgesamt vier Deckenverkleidungselementen 17, sechs Deckenverkleidungselementen 18 und vier Deckenverkleidungselementen 19. Die verwendeten Verkleidungs- und Ausstattungsteile gemäß der zweiten Ausführungsform für die Flugzeuge 1, 3 und 5 mit verschiedenen Rumpfdurchmessern sind in einer Übersicht in Fig. 3D zusammenfassend dargestellt.

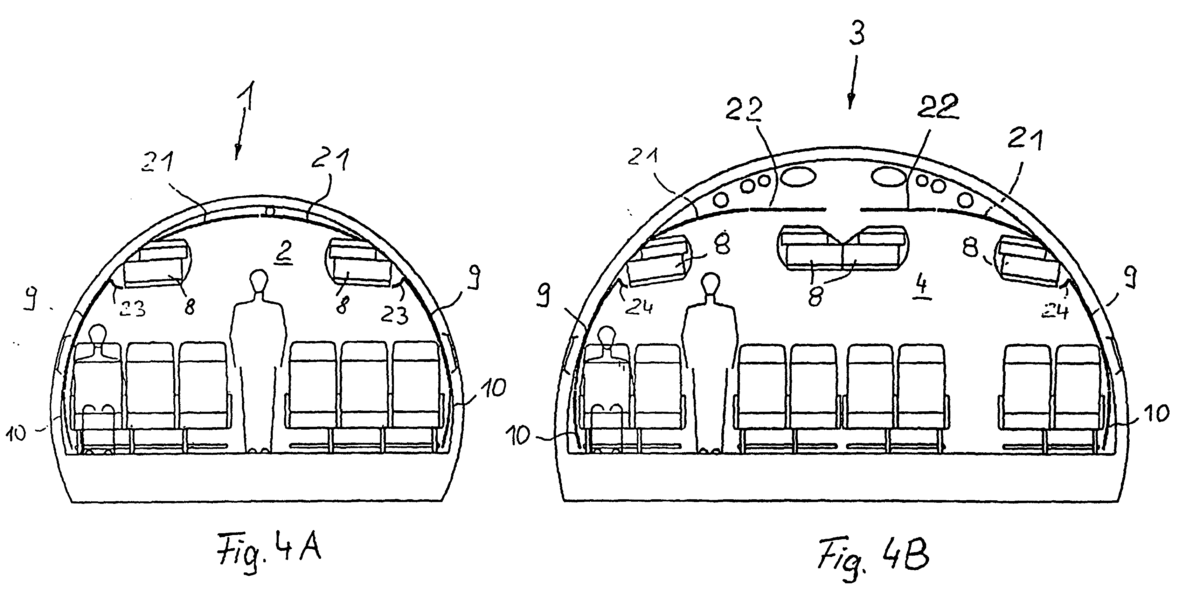

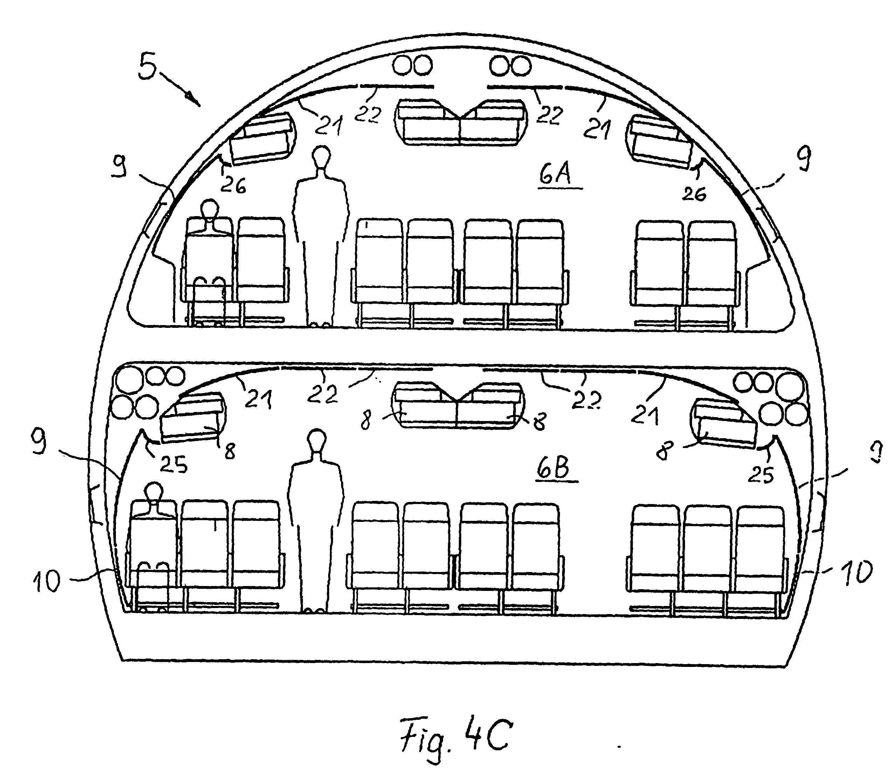

In einer dritten Ausführungsform der Innenausstattung, die in den Fign. 4A bis 4D dargestellt ist, konnte eine weitere Reduzierung der Typenvielfalt der Deckenverkleidungsteile realisiert werden. In dieser Ausführungsform werden Gepäckablagen (Hatracks) 8, Seitenverkleidungen (Sidewall Panel) 9 und Fußraumverkleidungen (Dado Panel) 10 prinzipgleich zu den vorangegangenen Ausführungsformen genutzt. Einzig bei den kleinflächigen Lichtabdeckungen (Light Cover) wurden passgenaue Typen 23, 24, 25, 26 vorgesehen, was den Vorteil bietet, dass die für die vorangegangenen Ausführungsformen vorgesehene Überlängenkaschierung entfallen kann und damit konstruktive Möglichkeiten eröffnet werden, typspezifische Konstruktionselemente vorzusehen, beispielsweise Klimaluftauslässe in den Lichtabdeckungen bzw. in dem Bereich dieser Abdeckungen. Die Erhöhung der Typenvielfalt bei kleineren Bauteilen ermöglicht, die Anzahl der verschiedenen Typen der Deckenverkleidungen auf zwei verschiedene Typen 21 und 22 zu reduzieren. Da insbesondere bei den großflächigen Bauteilen 21 und 22 durch Erhöhung der Stückzahlen der Fertigungsaufwand je Stück (anteilige Werkzeugkosten) verringert werden kann, bedeutet die Erhöhung der Typenanzahl der kleinflächigen Lichtabdeckungen keine Erhöhung des Gesamtaufwandes.
Die Decke der Passagierkabine 2 gemäß Fig. 4A vom Flugzeug mit dem kleinsten Rumpfdurchmesser 1 ist in dieser dritten Ausführungsform zweiteilig ausgeführt; sie besteht aus zwei symmetrisch angeordneten, gekrümmten Deckenverkleidungselementen 21.
Die Decke der Passagierkabine 4 gemäß Fig. 4B mit zwei Gängen zeigt eine vierteilige Ausführung. Jeweils ein gekrümmtes Deckenverkleidungselement 21 deckt den äußeren Deckenbereich der Passagierkabine 4 ab. Die mittleren Deckenbereiche werden durch das nahezu planare oder nur geringfügig gekrümmte Deckenverkleidungselement 22 abgedeckt, welches ausreichend lang ist, um bis zu den mittleren Gepäckablagen die Decke zu verkleiden.
Die Passagierkabine des Flugzeuges 5 gemäß Fig. 4C weist im Oberdeck 6A eine der Passagierkabine 4 gleichende Anordnung von Deckenverkleidungselementen 21 und 22 auf. Beim Mitteldeck 6B wird das Deckenverkleidungselement 21 jeweils im äußeren Deckenbereich angeordnet.

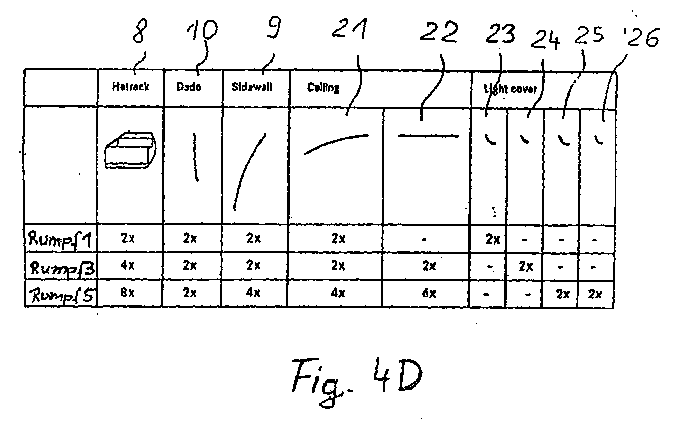

Die mittleren Deckenbereiche bis zum Bereich der mittleren Gepäckablagen 8 werden durch zwei nahezu planare oder nur geringfügig gekrümmte Deckenverkleidungselemente 22 abgedeckt. Aufgrund der üblicherweise symmetrischen Anordnung von den Verkleidungselementen in Bezug auf die Flugzeuglängsachse ergibt sich somit ein Bedarf für das Flugzeug 5 mit ovalförmigem Querschnitt von insgesamt vier Deckenverkleidungselementen 21 und sechs Deckenverkleidungselementen 22. Die verwendeten Verkleidungs- und Ausstattungsteile gemäß der dritten Ausführungsform für die Flugzeuge 1, 3 und 5 mit verschiedenen Rumpfdurchmessern sind in einer Übersicht in der Fig. 4D zusammenfassend dargestellt.

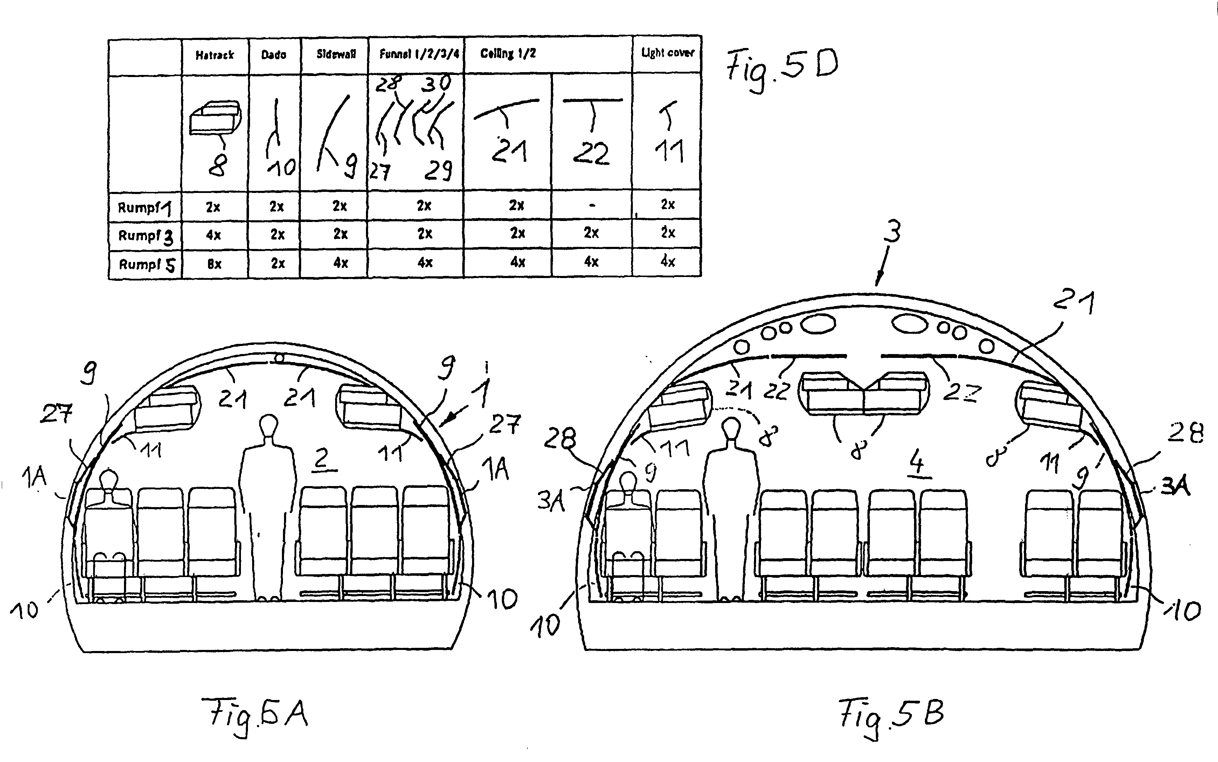

Eine vierte Ausführungsform ist in den Fign. 5A bis 5D gezeigt. Die in den Fign. 5A bis 5C gezeigten Rumpfquerschnitte 1, 3 und 5 beinhalten eine Kombination von Ausstattungs- und Verkleidungsteilen der zweiten und dritten Ausführungsform, wobei mit dieser Kombination eine geräumige Gesamtanmutung der Passagierkabine bei größtmöglicher Wirtschaftlichkeit erreicht ist. In dieser Ausführungsform wurde berücksichtigt, dass aufgrund der unterschiedlichen Rumpfgeometrien der Flugzeugrümpfe 1, 3 und 5 ein Übergang von den Fenstern 1A, 3A bzw. 5A im Flugzeugrumpf 1, 3 bzw. 5 zum jeweiligen Seitenwandverkleidungsteil 9 unterschiedliche Anpassungen notwendig macht. Diese Anpassungen werden mittels Fenstertrichter 27 bis 30 realisiert.
In Fig. 5D ist in einer Übersicht dargestellt, welche Verkleidungs- und Ausstattungsteile und in welcher Anzahl für die vierte Ausführungsform notwendig sind.
In dieser Ausführungsform werden Gepäckablagen (Hatracks) 8, Seitenverkleidungen (Sidewall Panel) 9 und Fußraumverkleidungen (Dado Panel) 10 prinzipgleich zu den vorangegangenen Ausführungsformen genutzt. Die Lichtabdeckung 11 entspricht der in der zweiten Ausführungsform erwähnten Form.
Die Decke der Passagierkabine 2 gemäß Fig. 5A vom Flugzeug mit dem kleinsten Rumpfdurchmesser 1 ist in dieser vierten Ausführungsform zweiteilig ausgeführt; sie besteht aus zwei symmetrisch angeordneten, gekrümmten Deckenverkleidungselementen 21. Die Decke der Passagierkabine 4 gemäß Fig. 5B mit zwei Gängen zeigt eine vierteilige Ausführung. Jeweils ein gekrümmtes Deckenverkleidungselement 21 deckt den äußeren Deckenbereich der Passagierkabine 4 ab. Die mittleren Deckenbereiche werden durch das nahezu planare oder nur geringfügig gekrümmte Deckenverkleidungselement 22 abgedeckt, welches ausreichend lang ist, um bis zu den mittleren Gepäckablagen die Decke zu verkleiden. Die Passagierkabine des Flugzeuges 5 gemäß Fig. 5C weist im Oberdeck 6A eine der Passagierkabine 4 gleichende Deckenverkleidungsanordnung 21 und 22 auf. Beim Mitteldeck 6B wird das Deckenverkleidungselement 21 jeweils im äußeren Deckenbereich angeordnet. Die mittleren Deckenbereiche bis zum Bereich der mittleren Gepäckablagen 8 werden durch zwei nahezu planare oder nur geringfügig gekrümmte Deckenverkleidungselemente 22 abgedeckt. Damit gleicht die Deckenanordnung dieser Ausführungsform der Deckenanordnung der dritten Ausführungsform. Die Fenstertrichter 27 bis 30 sind angepasst an die zu kaschierende Bautiefe zwischen dem entsprechenden Seitenverkleidungsteil 9 und dem Fenster 1A, 3A bzw. 5A ausgebildet und weisen unterschiedliche Trichtertiefen auf. In Fig. 5A ist der Fenstertrichter 27 mit der geringsten Trichtertiefe dargestellt. Da das Verkleidungsteil 9 bevorzugt dem Rumpfdurchmesser dieses Flugzeugrumpfes 1 angepasst ist, ist in diesem Fall die geringste Bautiefe zu kaschieren. In Fig. 5B ist der Fenstertrichter 28 mit etwas größerer Trichtertiefe sowie in Fig. 5C die Fenstertrichter 29 und 30 für den größten Rumpfdurchmesser 5 ersichtlich.

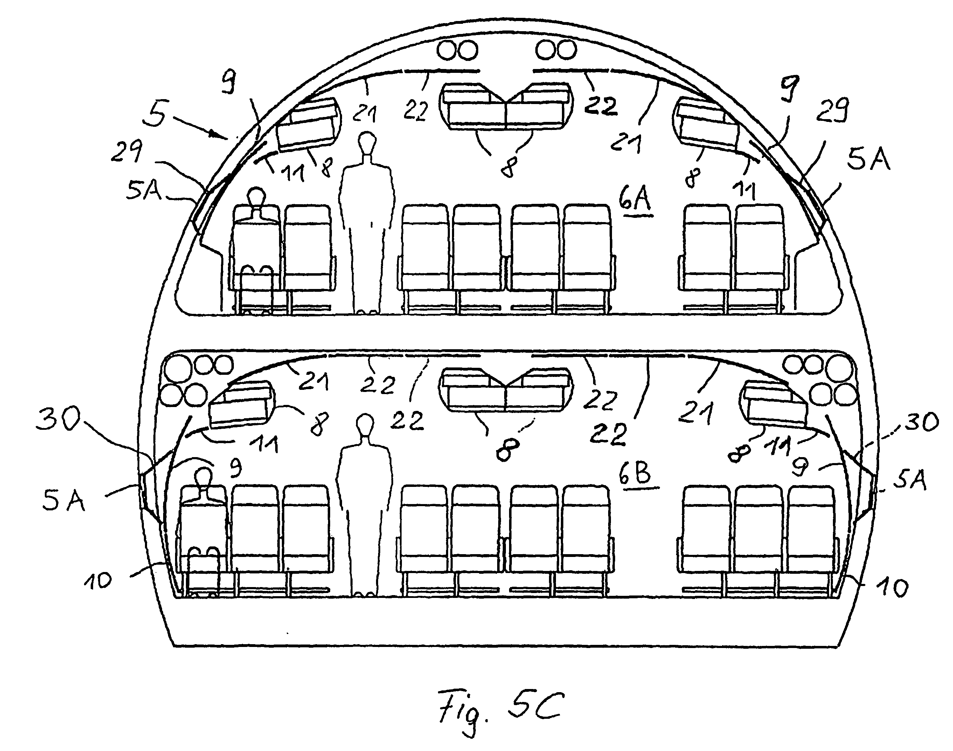

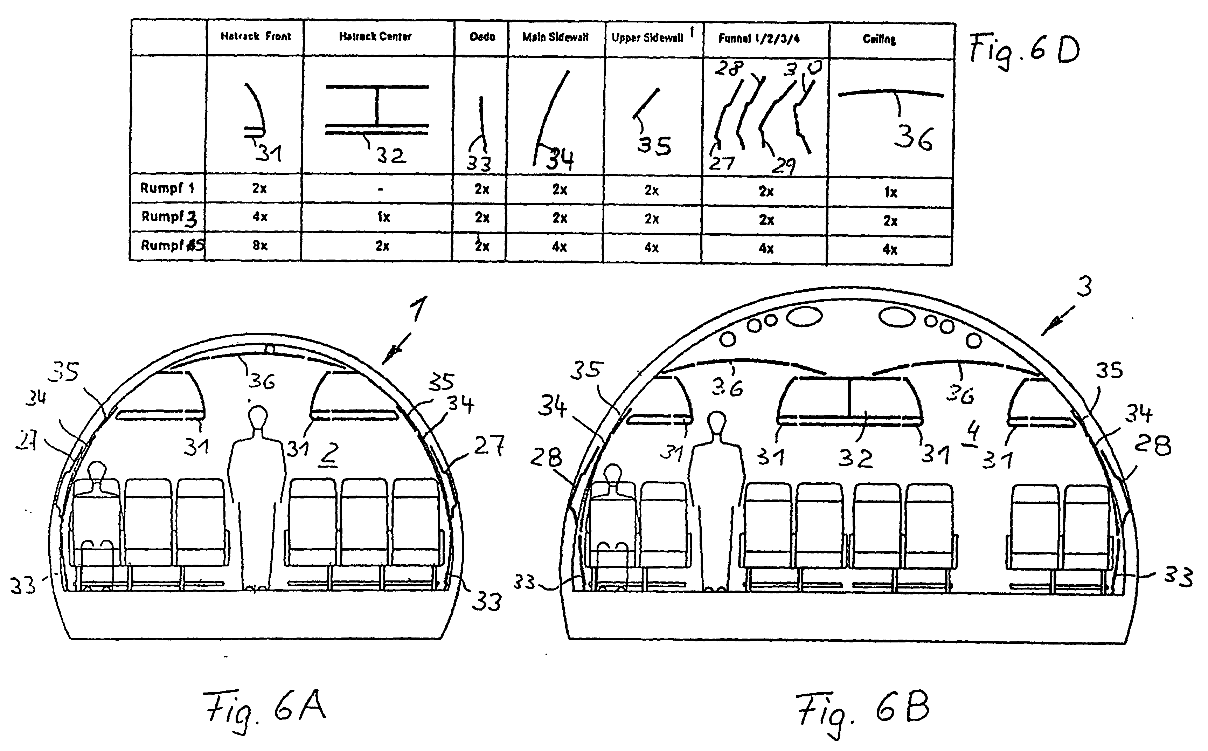

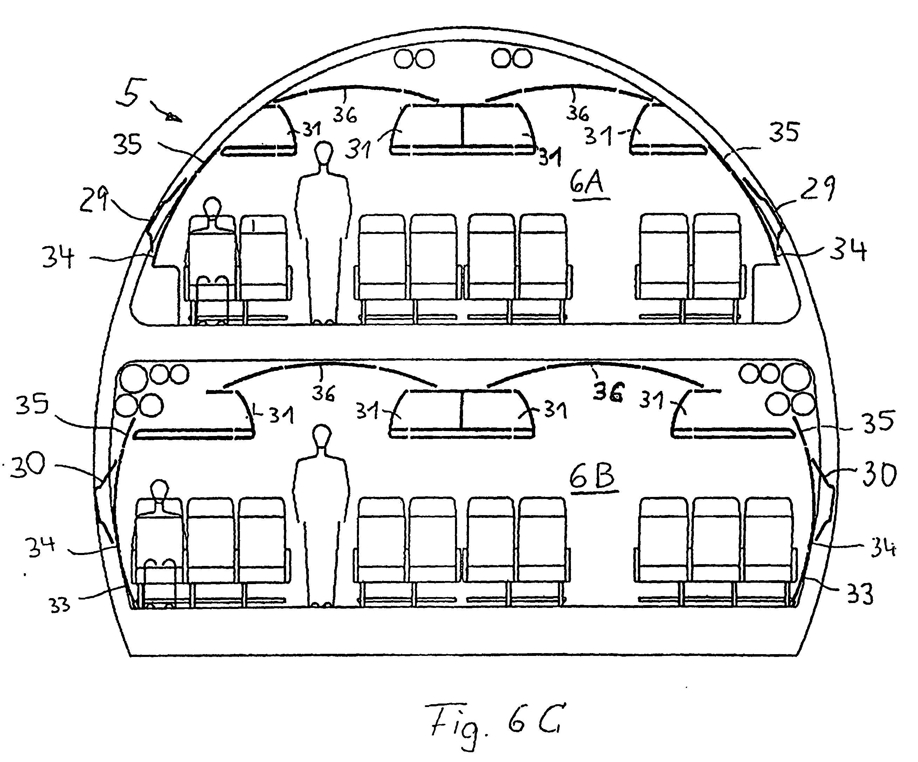

In den Fign. 6A bis 6D ist eine fünfte Ausführungsform mit einer Anwendung von modularen Kabinenbauteilen (Verkleidungs- und Ausstattungsteile) gezeigt. Diese Ausführungsform ist gekennzeichnet durch die Modularität einzelner Verkleidungselemente. So ist beispielsweise das Seitenverkleidungsteil aus einem Hauptseitenverkleidungsteil 34 und einem oberen Seitenverkleidungsteil 35 gebildet. Die Gepäckablagen werden gebildet aus Gepäckablagenvorderteilen 31, welche für die gesamten Flugzeugtypen (beispielhaft 1, 3 und 5) eingesetzt werden können, sowie typenübergreifenden Gepäckablagenmittelteilen 32 für die mittleren Gepäckablagen der Passagierkabinen 4 und 6. Für die nicht bezeichneten Gepäckablagen werden spezifische, typenangepasste Bauteile verwendet. Auch für die Deckenverkleidung in dieser fünften Ausführungsform ist eine Kombination von typenübergreifenden Bauteilen und der Passagierkabine angepassten spezifischen Bauteilen vorgesehen. Ein typenübergreifendes (standardisiertes) Deckenverkleidungsteil 36 ist in der Flugzeugkabine 2 einmal, in der Flugzeugkabine 4 zweimal und in der Passagierkabine 6 viermal vorgesehen.

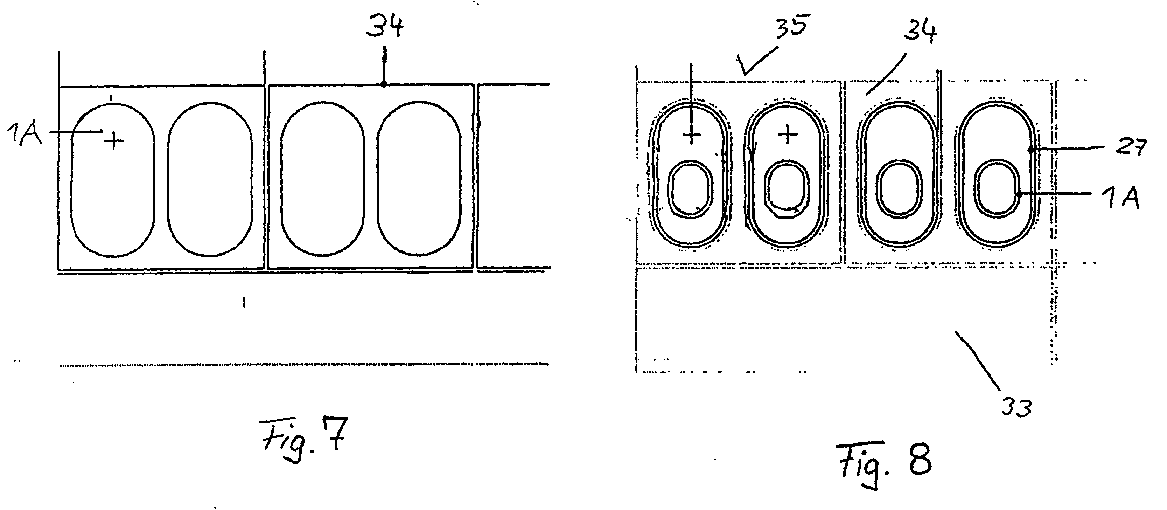

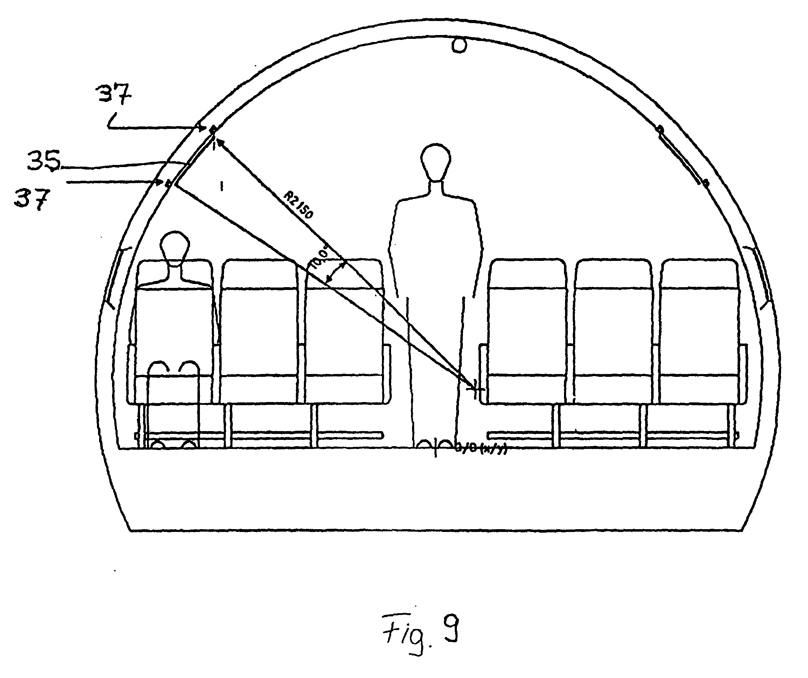

In den Fign. 7 bis 9 sind einzelne Ausstattungsteile als Einzelheit dargestellt. Die Fig. 7 zeigt ein Seitenverkleidungsteil, beispielsweise das Hauptseitenverkleidungsteil 34 in einer Ansicht von vorn. Das Seitenverkleidungsteil 34 ist mit einer Öffnung für das Fenster 1A, 3A bzw. 5A, vorzugsweise angepasst an den Fenstertrichter 27, 28, 29 oder 30 (siehe Fig. 8) vorgesehen. Aus Einbau- und Wartungsgründen ist das Seitenverkleidungsteil 34 in der Breite vorzugsweise auf maximal zwei Spantfelder (umfassend zwei Fenster in der gezeigten Ausführung) begrenzt. Oberhalb des Hauptseitenverkleidungsteiles 34 ist entsprechend der fünften Ausführungsform das obere Seitenverkleidungsteil 35 vorgesehen und nach unten schließt die Fußräumverkleidung 33 an. Eine Möglichkeit des Einbaus und schnellen Wechsels eines derartigen oberen Seitenverkleidungsteils 35 ist mittels einer Anordnung von Systemschienen 37 möglich, wie es in Fig. 9 gezeigt ist. Die Systemschienen 37 können aber auch als Träger für Lichtobjekte, Werbeflächen oder temporäre Dekorflächen dienen und so im Bereich des oberen Seitenverkleidungsteiles 35 individuelle Gestaltungen ermöglichen.

Die bisher beschriebenen Ausführungsformen sind beispielhafte Varianten, die die Grundidee - typenübergreifend Bauteile in verschiedenen Passagierkabinen einzusetzen - näher erläutern. Es gibt einerseits die Möglichkeit, mit dem modularen Zusammensetzen von typenübergreifenden, möglicherweise standardisierten Bauteilen ein Höchstmaß an Wirtschaftlichkeit mit einer Verringerung der Bauteilvielfalt zu erreichen oder andererseits durch Kombination von spezifischen, der Rumpfgröße angepassten Bauteilen mit einigen typenübergreifenden Bauteilen zu kombinieren, um u.a. den spezifischen Größenverhältnissen der einzelnen Passagierkabinen besser Rechnung zu tragen. Darüber hinaus ist es vorgesehen - wie beispielsweise in der in den Fign. 6A bis 6D gezeigten fünften Ausführungsform - Bauteile selbst modular zu gestalten, um eine Vereinheitlichung und damit durch eine Erhöhung der Stückzahl eine Kostensenkung zu erreichen und andererseits den spezifischen Anforderungen (z.B. Abmessungen) der verschiedenen Flugzeugpassagierkabinen Rechnung zu tragen. Wie in Fig. 9 gezeigt, können mit dem Verwenden des modularen oberen Seitenverkleidungsteiles 35 und Systemschienen 37 Möglichkeiten zur individuellen Anpassung an Kundenwünsche vorgesehen werden. So sind auf einfache Weise airlinespezifische Modifikationen realisierbar, beispielsweise eine Veränderung der Klasseneinteilung, vorzugsweise durch Veränderung des oberen Seitenverkleidungsteiles 35 im Dekor, oder eine Airline kann ihr individuelles Zeichen bzw. ihren Stil durch Gestaltung dieses Seitenverkleidungsteiles 35 zum Ausdruck bringen, ohne den gesamten Bereich der Passagierkabine neu zu gestalten bzw. eine Änderung einer Vielzahl von Verkleidungsteilen durchführen zu müssen.

### Bezugszeichen

- 1 -: Flugzeugrumpf mit kleinem Rumpfdurchmesser
- 1A -: Fenster für Flugzeug gemäß 1
- 2 -: Passagierkabine für Flugzeug gemäß 1
- 3 -: Flugzeugrumpf mit größerem Rumpfdurchmesser
- 3A -: Fenster für Flugzeug gemäß 3
- 4 -: Passagierkabine für Flugzeug gemäß 3
- 5 -: Flugzeugrumpf mit ovalem Rumpf
- 5A -: Fenster für Flugzeug gemäß 5
- 6 -: Passagierkabine für Flugzeug gemäß 5
- 6A -: Oberes Deck
- 6B -: Mittleres Deck
- 7 8 -: Gepäckablagen (Hatrack)
- 9 -: Seitenverkleidungen (Sidewall-Panels)
- 10 -: Fußraumverkleidungen (Dado-Panels)
- 11 -: Seitenlichtabdeckungen (Lateral Light Cover)
- 12 -: Spaltbereich/Übergangsbereich
- 13 - 16 -: Deckenverkleidungselemente in erster Ausführungsform
- 17 - 19 -: Deckenverkleidungselemente in zweiter Ausführungsform
- 20 - 21, 22 -: Deckenverkleidungselemente in dritter Ausführungsform
- 23 - 26 -: Lichtabdeckungen (Light Cover) für dritte Ausführungsform
- 27 - 30 -: Fenstertrichter für vierte Ausführungsform
- 31 -: Gepäckablagenvorderteil für fünfte Ausführungsform
- 32 -: Gepäckablagenmittelteil für fünfte Ausführungsform
- 33 -: Fußraumabdeckung "
- 34 -: Hauptseitenverkleidungsteil "
- 35 -: oberes Seitenverkleidungsteil "
- 36 -: Deckenverkleidungsteil "
- 37 -: Systemschienen

## Patentansprüche

1. Passagierkabinenausstattungssystem zur Anwendung in Flugzeugpassagierkabinen unterschiedlicher Rumpfquerschnitte, enthaltend mehrere Innenausstattungsbauteile (9;11), wobei das Passagierkabinenausstattungssystem vorgesehen ist für eine erste Passagierkabine (2) eines Verkehrsflugzeuges mit einem kleineren ersten Rumpfdurchmesser (1) sowie für mindestens eine zweite Passagierkabine (4, 6) eines Verkehrsflugzeuges mit einem größeren zweiten Rumpfdurchmesser (3, 5) und mindestens zwei Seitenverkleidungsteile (9) gleicher Form und Abmessung vorgesehen sind und das mindestens erste Seitenverkleidungsteil (9) als Bestandteil der ersten Passagierkabine (2) sowie das mindestens zweite Innenausstattungsbauteil (9) als Bestandteil der zweiten Passagierkabine (4, 6) angeordnet ist und die Seitenverkleidungsteile (9), bedingt durch den Einbau in verschiedene Rumpfquerschnitte (1, 3, 5), bei überschüssiger Höhe des Seitenverkleidungsteils (9) eine überlappende Anordnung mit Lichtabdeckteilen (11) bilden, wobei im oberen Bereich des jeweiligen Seitenverkleidungsteils (9) das Lichtabdeckungsteil (11) zur Regulierung der Seitenhöhe der jeweiligen Passagierkabine (2, 4) vorgesehen ist.

2. Passagierkabinenausstattungssystem nach Anspruch 1, **dadurch gekennzeichnet dass**, ein Spalt (12) zwischen einem Seitenverkleidungsteil (9) und einem Lichtabdeckteil (11) als Klimaluftauslass ausbildet ist.

3. Verfahren zur Durchführung einer Passagierkabinenausstattung, insbesondere zum Einbau von typenübergreifenden Seitenverkleidungsteilen in Passagierkabinen (2, 4, 6) von Verkehrsflugzeugen verschiedener Rumpfquerschnittsgrößen (1, 3, 5), wobei mindestens ein Seitenverkleidungsteil (9) in Kombination mit Abdeckteilen (11) überlappend angeordnet wird und wobei die Überlappung entsprechend der überschüssigen Höhe des Seitenverkleidungsteils (9) im Verhältnis zur Größe der Passagierkabine (2, 4, 6) bestimmt wird.

## Claims

1. Passenger cabin panelling system for use in aircraft passenger cabins of differing fuselage cross-sections containing several interior panel components (9; 11), which passenger cabin panelling system is provided for a first passenger cabin (2) of a passenger aircraft with a smaller first fuselage diameter (1) and for at least a second passenger cabin (4, 6) of a passenger aircraft with a larger second fuselage diameter (3, 5), and at least two side panels (9) of the same shape and dimensions are provided and the at least first side panel (9) is provided as a component part of the first passenger cabin (2) and the at least second interior panel component (9) is provided as a component part of the second passenger cabin (4, 6), and the side panels (9) form an overlapping arrangement with light cover parts (11) if the side panel (9) has extra height due to the fact that it is fitted in different fuselage cross-sections (1, 3, 5), in which case the light cover part (11) in the top region of the respective side panel (9) is provided as a means of adjusting the lateral height of the respective passenger cabin (2, 4).

2. Passenger cabin panelling system as claimed in claim 1, **characterised in that** a gap (12) between a side panel (9) and a light cover part (11) serves as an air-conditioning outlet.

3. Method of fitting a passenger cabin panelling system, in particular for integrating universal side panels in passenger cabins (2, 4, 6) of passenger aircraft with differing sizes of fuselage cross-section (1, 3, 5), whereby at least one side panel (9) is combined in an overlapping arrangement with cover parts (11) and the overlap is determined on the basis of the excess height of the side panel (9) relative to the size of the passenger cabin (2, 4, 6).

## Revendications

1. Système d'équipement de cabine passagers destiné à des cabines passagers d'avions avec des sections de fuselage différentes, comprenant plusieurs modules d'équipement intérieur (9 ; 11), le système d'équipement de cabine passagers étant prévu pour une première cabine passagers (2) d'un avion de transport avec un premier diamètre de fuselage (1) plus petit ainsi que pour au moins une deuxième cabine passagers (4, 6) d'un avion de transport avec un deuxième diamètre de fuselage (3, 5) plus grand, au moins deux éléments d'habillage latéraux (9) de même forme et de même dimensions étant prévus, le au moins premier élément d'habillage latéral (9) étant disposé en tant qu'élément constitutif de la première cabine passagers (2) et le au moins deuxième élément d'habillage latéral (9) étant disposé en tant qu'élément constitutif de la deuxième cabine passagers (4, 6) et les éléments d'habillage latéraux (9), du fait du montage dans différentes sections de fuselage (1, 3, 5), formant un montage à recouvrement avec des éléments de couverture d'éclairage (11), lorsque la hauteur de l'élément d'habillage latéral (9) est trop grande, l'élément de couverture d'éclairage (11) étant prévu dans la région supérieure de l'élément d'habillage latéral (9) aux fins de régler la hauteur latérale de la cabine passagers (2, 4) concernée.

2. Système d'équipement de cabine passagers selon la revendication 1, **caractérisé par le fait qu'**une fente (12) entre un élément d'habillage latéral (9) et un élément de couverture d'éclairage (11) est conformée en sortie d'air de climatisation.

3. Procédé pour la réalisation d'un aménagement de cabine passagers, notamment pour le montage d'éléments d'habillage latéraux dans des cabines passagers (2, 4, 6) d'avions de transport avec des sections de fuselage (1, 3, 5) différentes, au moins un élément d'habillage latéral (9) étant combiné avec recouvrement avec des éléments de couverture (11), le recouvrement étant déterminé en fonction de l'excédent de hauteur de l'élément d'habillage latéral (9) par rapport à la taille de la cabine passagers (2, 4, 6).
